# EUROPÄISCHE PATENTANMELDUNG

(11) **EP 2 610 110 A1**
(43) Veröffentlichungstag der Anmeldung: **03.07.2013**
(21) Anmeldenummer: 12466023.4
(22) Anmeldetag: 11.12.2012
(51) Int. Cl.: B60R 7/06

(54) **Ausklappbarer Handschuchkasten eines Armaturenbretts**

(30) Priorität: 12.12.2011 CZ 20110809
(71) Anmelder: Skoda Auto A.S., 293 60 Mladá Boleslav (CZ)
(72) Erfinder: Paldus, Petr, 40801 Rumburk (CZ); Jirasek, Pavel, 46312 Simonovice (CZ); Stech, Jiri, 46331 Chrastava (CZ)

(57) **Zusammenfassung**

Aufklappbarer Handschuhkasten (3) eines Armaturenbretts (1) bestehend aus einem aufklappbaren Korb (6), der in einer Öffnung (2) des Armaturenbretts (1) angeordnet ist, wobei der aufklappbare Korb (6) aus einer geschlossenen in die aufgeklappte Stellung aufklappbar ist und durch einen vorderen Deckel (7), Seitenwände (8) und eine Hinterwand (9) des aufklappbaren Korbes (6) mit einer Oberkante (10) gebildet wird. Die Hinterwand (9) des Korbes (6) weist im oberen Bereich Anschläge (11) und im unteren Bereich federnde Befestigungselemente (12) auf, welche auf Befestigungsbolzen (13) aufgesteckt sind, die im unteren Bereich der Öffnung (2) angeordnet sind. Der aufklappbare Korb (6) kann aus der aufgeklappten in die aufgezogene Position so verstellt werden, dass der aufklappbare Korb (6) zwischen der aufgeklappten und der aufgezogenen Stellung eine vorgeschobene Zwischenlage und weiter eine verschwenkte Zwischenlage durchläuft.

Die Entnahme des aufklappbaren Korbes (6) bedarf also keiner Spezialwerkzeuge und auch die sich überlappenden Teile müssen nicht durchgedrückt werden.

## Beschreibung

### Technisches Gebiet

Die Erfindung betrifft den aufklappbaren Handschuhkasten eines Armaturenbretts eines Kraftfahrzeuges, insbesondere dann einen für den Ausbau aus der Öffnung in dem Armaturenbrett angepassten aufklappbaren Handschuhkasten.

### Bisheriger Stand der Technik

Die Handschuhkasten der Personenkraftwagen sind an der Beifahrerseite in der Regel mit einem Fach ausgestattet, das zum Ablegen kleiner Gegenstände dient. Diese Fächer sind entweder als ein Kasten ausgeführt, der ein Bestandteil des Armaturenbretts und mit einem Klappdeckel zugedeckt ist oder als ein separat aufklappbarer Kasten, der in der Öffnung des Armaturenbretts aufklappbar befestigt ist. Da hinter des Armaturenbretts die Bauteile wie Bordnetzsicherungen, Polenfilter oder Airbagzünder angeordnet sind, welche zugänglich sein müssen, erscheint als vorteilhaft für die Wartung dieser Teile die genannte Öffnung in dem Armaturenbrett zu nutzen. In diesem Fall erscheint als zweckmäßig die Möglichkeit den Kasten aufzuklappen oder auszunehmen, um den Zugang zu den gewünschten Bauteilen zu gewähren. Dies wird dadurch erzielt, dass die gesamte Baugruppe des Kastens nach dem Lösen der Schraubverbindungen ausgebaut wird und danach die im Fach des Armaturenbretts angeordneten Elektrostecker, die verschiedenen Schalter oder Elektrokomponente abgekoppelt werden.

Bei einem separat aufklappbaren Handschuhkasten wird der Zugang zu dem Raum hinter dem Handschuhkasten in zwei nacheinander folgenden Schritten sichergestellt. Zuerst wird der aufklappbare Handschuhkasten in die geöffnete Stellung aufgeklappt, in der dieser durch das Aufsetzen der Anschlagelemente des Faches auf die Anschlagflächen, welche Bestandteil der Schalttafel sind, gesichert ist. Diese Elemente sind entweder separate mechanisch ausbaubare Bauteile oder ein Bestandteil des aufklappbaren Faches. Im zweiten Schritt werden entweder die Anschlagelemente ausgebaut, oder - wenn sie Bestandteile des Faches sind - gegenüber den Festteilen des Armaturenbretts verschwenkt, wobei ihr Federungspotential genutzt wird. Nach dem Ausbau oder der Verschwenkung der Anschlagelemente wird die gegenseitige Überlappung des Anschlags und der Aufnahmefläche aufgehoben und das Fach kann voll aufgeklappt oder entnommen werden. Nachteilig ist, dass die zum Ausbau des Faches des Armaturenbretts bestimmten Anschlagteile in diesem Fall nicht ausreichend steif sein können. Es handelt sich um federnde Anschlagelemente, die durch die Verschwenkung gegenüber den Festteilen des Armaturenbretts gelöst werden, wodurch beim Ein- oder Ausbau diese infolge des Durchdrückens beschädigt werden können.

### Darstellung der Erfindung

Die Aufgabe wird durch einen erfindungsgemäßen aufklappbaren Handschuhkasten eines Armaturenbretts gelöst, der aus einem aufklappbaren Korb besteht, der in einer Öffnung des Armaturenbretts angeordnet ist, deren Rückwand mit einer Kante abgeschlossen ist, wobei der aufklappbare Korb aus einer geschlossenen in die aufgeklappte Stellung aufklappbar ist und durch einen vorderen Deckel, Seitenwände und eine Hinterwand des Korbes mit einer Oberkante gebildet wird, wobei die Hinterwand des Korbes im oberen Bereich die Anschläge und im unteren Bereich federnde Befestigungselemente aufweist, welche auf Bolzen aufgesteckt sind, die im unteren Bereich der Öffnung angeordnet sind, wobei der aufklappbare Korb aus der aufgeklappten in die aufgezogene Position verstellbar ist. Die Darstellung der Erfindung liegt darin, dass der aufklappbare Korb zwischen der aufgeklappten und der aufgezogenen Stellung stufenweise eine vorgeschobene Zwischenlage und weiter eine verschwenkte Zwischenlage durchläuft.

In der vorgeschobenen Zwischenlage des aufklappbaren Korbes liegt die Oberkante der Hinterwand des Korbes der Kante der Rückwand an und die Anschläge liegen der Rückwand des Armaturenbretts an, wobei die federnden Befestigungselemente außerhalb der Bolzen sind.

In der verschwenkten Zwischenlage des aufklappbaren Korbes sind die Anschläge unter der Kante der Rückwand und die federnden Befestigungselemente außerhalb der Öffnung.

### Übersicht der Figuren der Zeichnungen

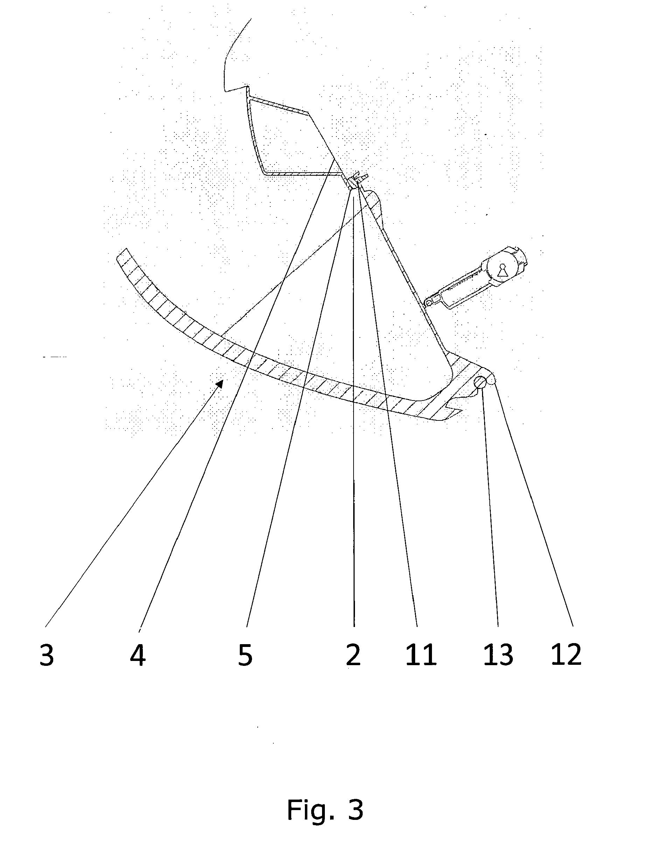

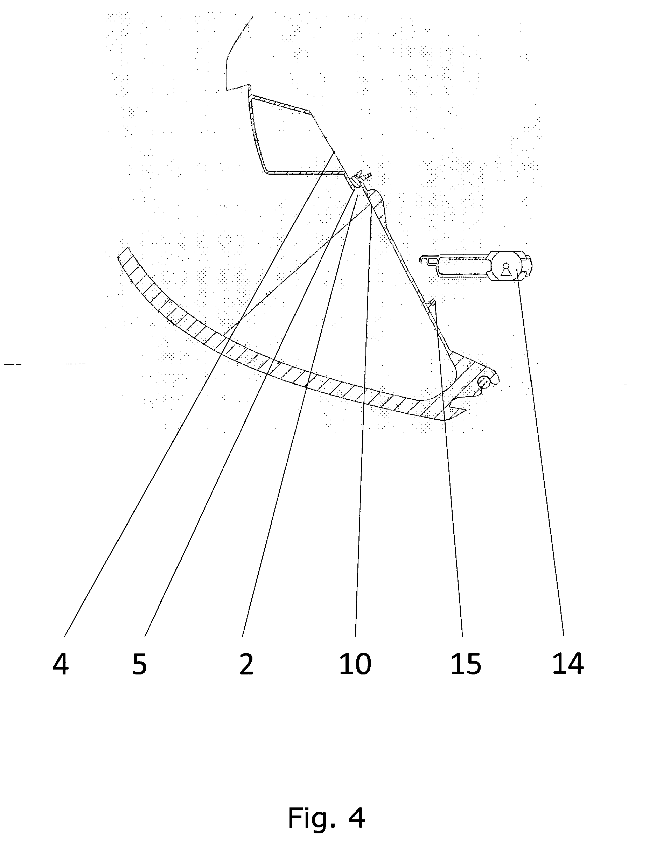

Die Erfindung wird näher anhand der Ausführungsbeispiele gemäß den beigefügten Zeichnungen erläutert, in denen zeigen: die Fig. 1 eine perspektivische Ansicht des Armaturentbrettbereiches mit dem aufklappbaren Korb, die Fig. 2 einen Schnitt des Armaturenbretts mit dem geschlossenen aufklappbaren Korb, die Fig. 3 einen Schnitt des Armaturenbretts mit dem aufgeklappten aufklappbaren Korb, die Fig. 4 einen Schnitt des Armaturenbretts nach dem Ausrücken der Bremse, die Fig. 5 einen Schnitt des Armaturenbretts mit dem aufklappbaren Korb in der vorgeschobenen Zwischenlage, die Fig. 6 einen Schnitt des Armaturenbretts mit dem aufklappbaren Korb in der verschwenkten Zwischenlage, die Fig. 7 einen Schnitt des Armaturenbretts mit dem heruntergelassenen aufklappbaren Korb und die Fig. 8 einen Schnitt des Armaturenbretts mit dem aufgezogenen aufklappbaren Korb.

### Ausführungsbeispiel der Erfindung

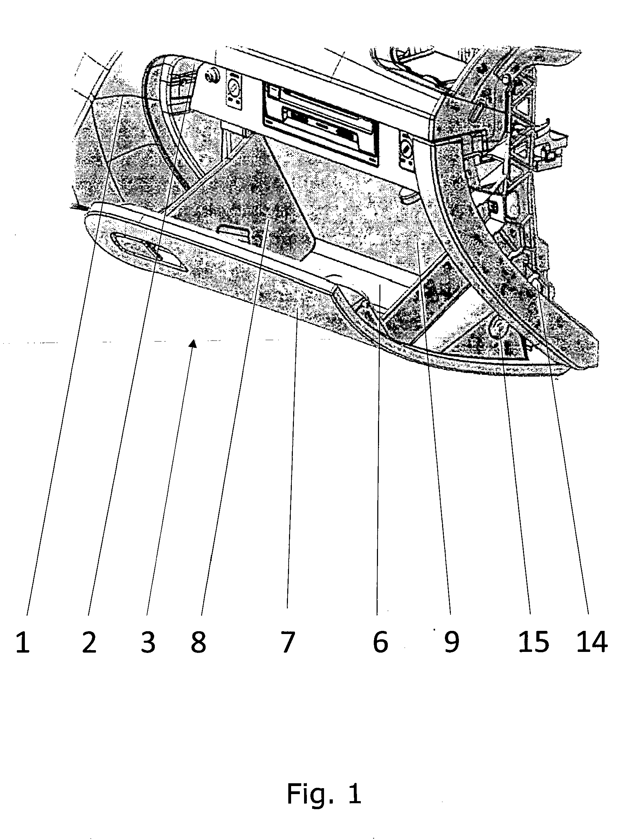

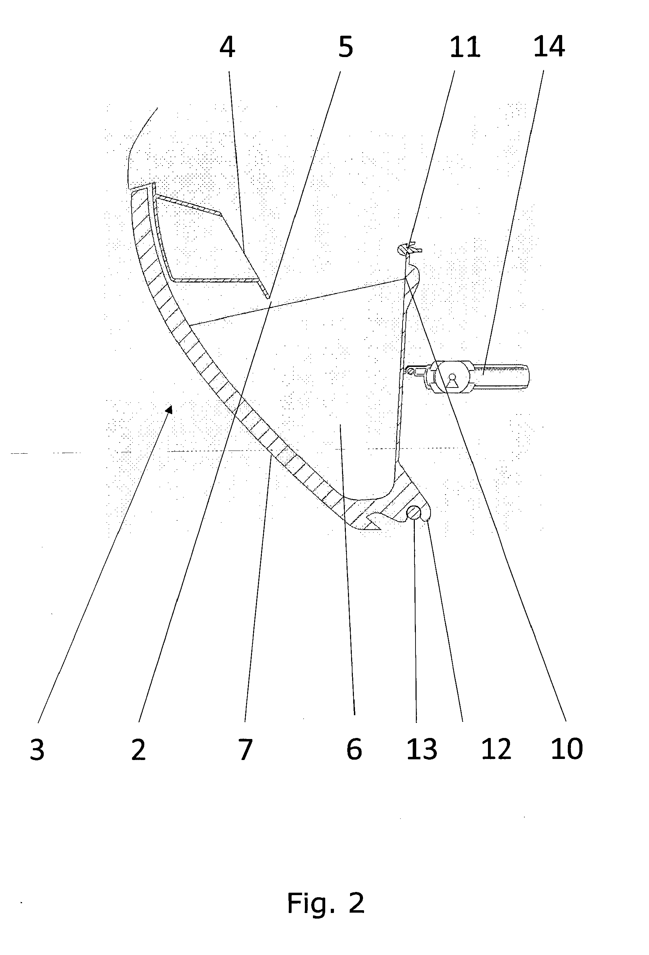

In der Fig. 1 ist in einer perspektivischen Ansicht der Bereich eines Armaturenbretts 1 dargestellt, wo gegenüber dem Beifahrersitz eine Öffnung 2 ist, in der ein aufklappbarer Handschuhkasten 3 des Armaturenbretts 1 angeordnet ist. Wie der Fig. 2 zu entnehmen ist, weist der Armaturenbrett 1 eine Rückwand 4 mit einer Kante 5 auf. Der aufklappbare Handschuhkasten 3 des Armaturenbretts 1 umfasst einen aufklappbaren Korb 6, der einen Frontdeckel 7, Seitenwände 8 und eine Hinterwand 9 des Korbes 6 mit einer Oberkante 10 aufweist. Im oberen Bereich der Hinterwand 9 des Korbes 6 sind zwei Anschläge 11 und in dem unteren Bereich zwei federnde Befestigungselemente 12 angeordnet. Mit Hilfe dieser ist der aufklappbare Korb 6 in Verankerungsbolzen 13 in dem unteren Bereich der Öffnung 2 gelagert, sodass sein Aufklappen aus der geschlossenen in die aufgeklappte Stellung ermöglicht wird. Die Anschläge 11 dienen zum Feststellen des aufklappbaren Korbes 6 in der Stellung, die den Zugriff zu seinem Inhalt ermöglicht. Der aufklappbare Handschuhkasten 1 des Armaturenbretts 3 umfasst weiter eine Bremse 14, die mit einem Ende am Körper des Armaturenbretts 1 befestigt ist und mit dem zweiten Ende in einer am aufklappbaren Korb 6 angeordneten Aufhängung 15 eingerastet. Die Bremse 14 dient zur Steuerung bzw. Dämpfung der Bewegung des aufklappbaren Korbes 6 während des Öffnungsvorgangs.

Wenn der Raum hinter dem aufklappbaren Korb 6 des Armaturenbretts 1 zwecks Austausch des Polenfilters, der Kontrolle von Sicherungen im Sicherungskasten u.ä. zugänglich gemacht werden soll, wird dieser folgenderweise ausgebaut.

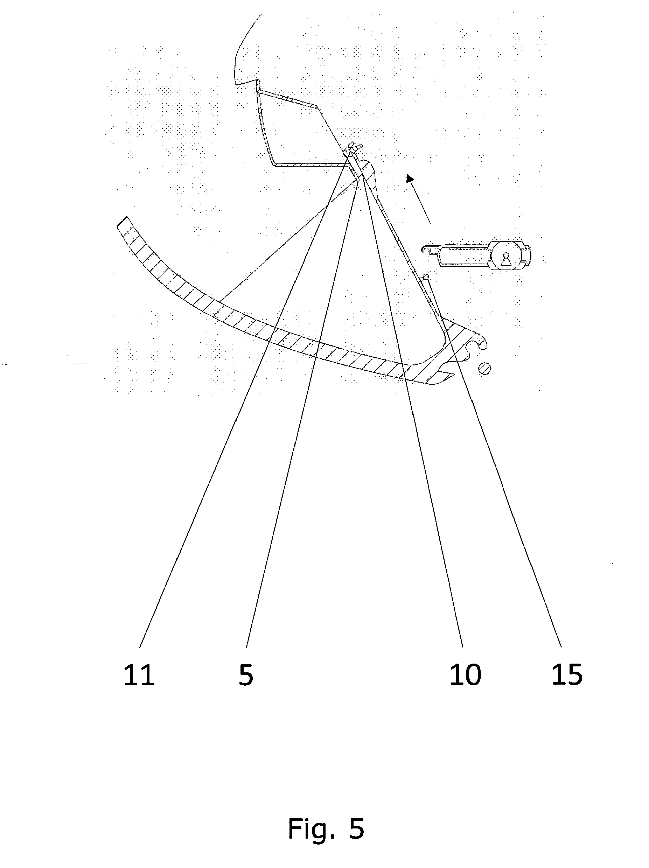

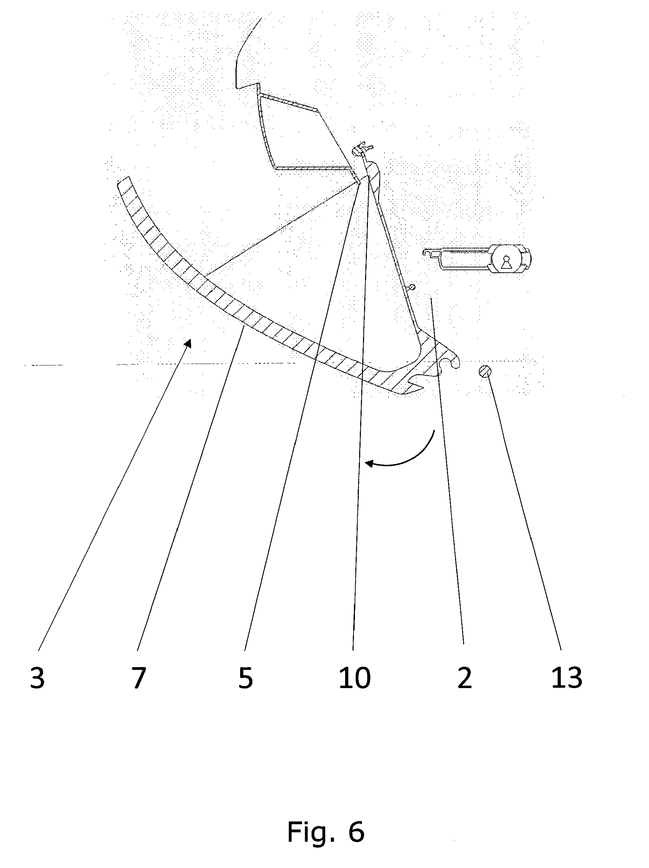

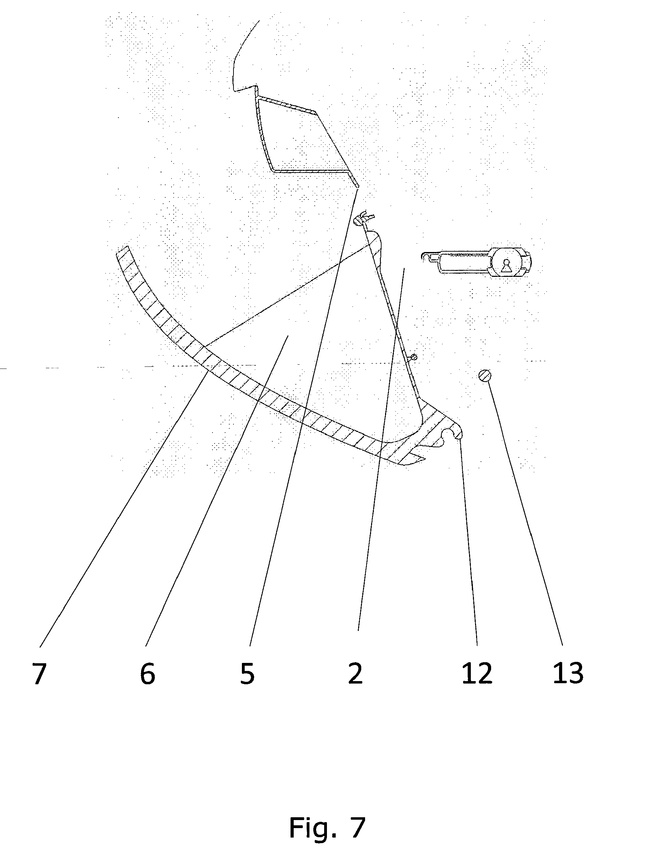

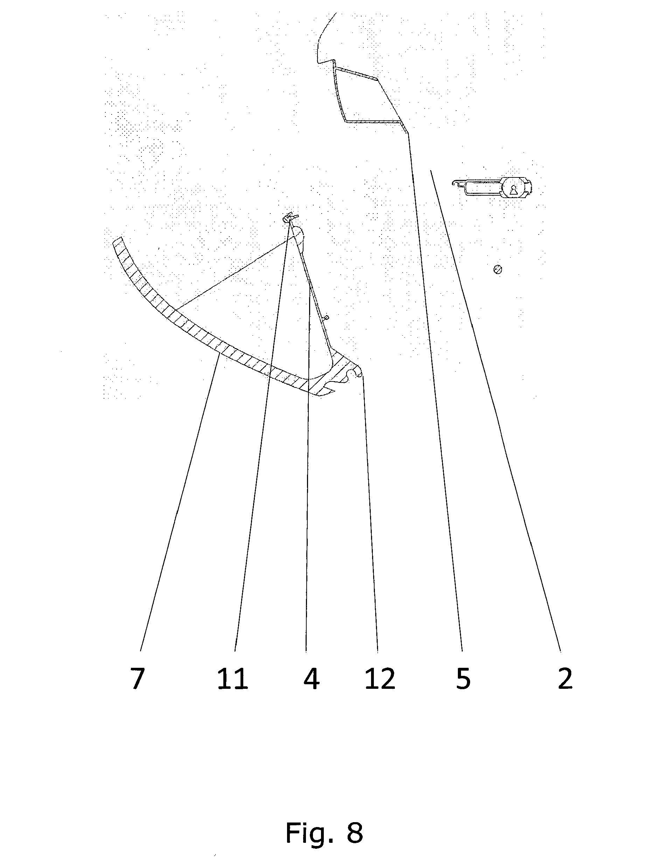

Zuerst wird der aufklappbare Korb 6 in die aufgeklappte Stellung aufgeklappt, in der er durch die Anschläge 11 gesichert wird, die der Kante 5 der Rückwand 4 des Armaturenbretts 1 anliegen. Danach wird an der Seite des Armaturenbretts 1 nach Abnahme der Seitenabdeckung (nicht abgebildet) die Bremse 14 aus der Aufhängung 15 gelöst und der aufklappbare Korb 6 aus den Befestigungsbolzen 13 in der Pfeilrichtung in die vorgeschobene Zwischenlage aufgezogen, wie in der Fig. 5 dargestellt ist. In dieser Stellung sind die federnden Befestigungselemente 12 aus den Befestigungsbolzen 13 abgezogen und die Oberkante 10 der Hinterwand 9 des auklappbaren Korbes liegt der Kante 5 der Rückwand 4 des Armaturenbretts 1 an, wobei die Anschläge 11 zur Rückwand 4 des Armaturenbretts 1 anliegen. Nachfolgend wird der aufklappbare Korb 6 in die Pfeilrichtung verschwenkt, wie der Fig. 6 zu entnehmen ist, bis in die verschwenkte Zwischenlage, wie aus der Fig. 7 hervorgeht. In dieser Stellung befinden sich die Anschläge 11 unter der Kante 5 der Rückwand 4 des Armaturenbretts 1, wobei die federnden Befestigungselemente 12 außerhalb der Öffnung 2 sind. Die Anschläge 11, die der Rückwand 4 des Armaturenbretts 1 anliegen, werden frei. In der letzten Phase (siehe Fig. 8) wird der aufklappbare Korb 6 vollständig aus der Öffnung 2 des Armaturenbretts 1 aufgezogen, sodass der Zugriff auf die gewünschten Komponenten ermöglicht wird. Der Einbau des aufklappbaren Korbes 6 in die Öffnung 2 des Armaturenbretts 1 erfolgt in der rückwärtigen Reihenfolge.

Die angeführte Anordnung des aufklappbaren Handschuhkastens 3 des Armaturenbretts 1 ermöglicht den Zugang zum Innenraum hinter dem aufklappbaren Korb 6, ohne dass Spezialwerkzeuge genutzt und auch die sich überlappenden Teile durchgedrückt werden müssen.

**Bezugszeichenliste**

| | |
|---|---|
| 1. | Armaturenbrett |
| 2. | Öffnung |
| 3. | Aufklappbarer Handschuhkasten |
| 4. | Rückwand |
| 5. | Kante |
| 6. | aufklappbarer Korb |
| 7. | Frontdeckel |
| 8. | Seitenwand |
| 9. | Hinterwand |
| 10. | Oberkante |
| 11. | Anschlag |
| 12. | federndes Befestigungselement |
| 13. | Befestigungsbolzen |
| 14. | Bremse |
| 15. | Aufhängung |

## Patentansprüche

1. Aufklappbarer Handschuhkasten eines Armaturenbretts bestehend aus einem aufklappbaren Korb, der in einer Öffnung eines Armaturenbretts angeordnet ist, dessen Rückwand mit einer Kante abgeschlossen ist, wobei der aufklappbare Korb aus einer geschlossenen in die aufgeklappte Stellung aufklappbar ist und durch einen vorderen Deckel, eine Seitenwände und eine Hinterwand des aufklappbaren Korbes mit einer Oberkante gebildet wird, wobei die Hinterwand des aufklappbaren Korbes im oberen Bereich Anschläge und im unteren Bereich federnde Befestigungselemente aufweist, welche auf Bolzen aufgesteckt sind, die im unteren Bereich der Öffnung angeordnet sind, wobei der aufklappbare Korb aus der aufgeklappten in die aufgezogene Position verstellbar ist, **dadurch gekennzeichnet, dass** der aufklappbare Korb (6) zwischen der aufgeklappten und der aufgezogenen Stellung eine vorgeschobene Zwischenlage und weiter eine verschwenkte Zwischenlage durchläuft.

2. Aufklappbarer Handschuhkasten eines Armaturenbretts nach Anspruch 1 **dadurch gekennzeichnet, dass** in der vorgeschobenen Zwischenlage des aufklappbaren Korbes (6) die Oberkante (10) der Hinterwand (9) des aufklappbaren Korbes (6) der Kante (5) der Rückwand (4) anliegt und die Anschläge (11) der Rückwand (4) dem Armaturenbrett (1) anliegen, wobei die federnden Befestigungselemente (12) außerhalb der Befestigungsbolzen (13) sind.

3. Aufklappbarer Handschuhkasten eines Armaturenbretts nach Anspruch 1 **dadurch gekennzeichnet, dass** in der verschwenkten Zwischenlage des aufklappbaren Korbes (6) die Anschläge (11) unter der Kante (5) der Rückwand (4) und die federnden Befestigungselemente (12) außerhalb der Öffnung (2) sind.
